**Europäisches Patentamt**

(19) **European Patent Office**

**Office européen des brevets**

(11) Publication number: **0 038 687**
**A2**

## (12) EUROPEAN PATENT APPLICATION

(21) Application number: **81301694.6**

(22) Date of filing: **16.04.81**

(51) Int. Cl.³: **G 05 B 19/10**
**G 05 B 23/02**

(30) Priority: **17.04.80 GB 8012637**

(43) Date of publication of application:
**28.10.81 Bulletin 81/43**

(84) Designated Contracting States:
**DE FR GB IT SE**

(71) Applicant: **Kenwood Manufacturing Company Limited**
**Thorn House Upper Saint Martin's Lane**
**Lóndon WC2H 9ED(GB)**

(72) Inventor: **Bates, Douglas Henry**
**13, Clarence Road**
**Shanklin Isle of Wight(GB)**

(74) Representative: **Marsh, Robin Geoffrey et al,**
**THORN EMI PATENTS LIMITED Blyth Road**
**Hayes Middlesex, UB3 1BP(GB)**

(54) **Control device.**

㊼ A device for controlling the operation of an associated apparatus; a washing machine, oven, dishwasher or other domestic appliance, for example. The device is provided with a microprocessor (1) for controlling the operating cycle of the apparatus in accordance with one or more operational options selected by a user. The microprocessor (1) is used to actuate a signalling device (25-27) which issues audible signals representing the options whereupon the user actuates an input device to indicate that a particular option has been selected. Alternatively a signalling device for issuing eye visible signal may be used.

EP 0 038 687 A2

: 1 :

## CONTROL DEVICE

The present invention relates to control devices for controlling the operating of associated apparatus and, more particularly, to control devices for controlling the operation of domestic appliances.

In the case of a domestic appliance such as a washing machine, it has been customary in the past to provide on the washing machine control panel a number of controls operable by the user to select various functions and options as regards the steps in the operating cycle of the machine and the values of parameters such as water temperature. This has usually required providing at least one control per function or variable. Often more than one control is used. For example in the case of the wash load size there may be different buttons for small, medium and large loads. Similarly the temperature selector may be a rotary switch which, although only one control in fact includes at least one set of contacts for each temperature or temperature range which it is possible to select. The number of controls, push buttons, rotary knobs etc., is a significant factor in both the cost of production of the machine and in determining the reliability of the machine. Although the controls could be made individually more reliable, this would make them more expensive.

According to the present invention we provide a device for controlling the operation of an associated apparatus charaterised in that said device comprises,

means for controlling the operating cycle of the apparatus in accordance with a selected one of a number of options,

signalling means, responsive to the control means, for generating a signal, perceptible by a user, indicative of each of said operations, and input means, operable by the user, for conditioning the control means to select said one operation in response to a corresponding signal perceived by the user.

In a preferred embodiment of the invention the signalling means generates signals, at preset time intervals, indicative of successive operations and the control means responds to conditioning by the input means, to select an operation, only within the preset time interval following generation by the signalling means, of the signal corresponding to that operation. Alternatively the signalling means could be adapted to generate signals in sequence, indicative of successive operations, the input means being operable to indicate that an operation has or has not been selected and the signals representing the next succeeding operations being generated only when that indication has been given. The device may be in the form of a programmer and the associated apparatus may be a domestic appliance such as a clothes washing machine, dish washer or oven or any other appliance where the user is required to make selections as to functions, values of variables, etc. relating to the operation of the apparatus. The variables may include the desired values or ranges of variables to arise in the course of an operating cycle of the appliance, such as for example water temperature or variables such as the type of washing to be washed, which the control device has no control over but to which it nevertheless needs to respond to carry out an effective operating cycle of the machine.

It will be appreciated that by presenting each of the options in turn, only a single input device, which may, for example, be a simple push button, is required to input the user's selections in respect of the various options.

The controlled device is preferably suitably programmed so that it takes the operation of the input device during a period following the signalling of each option to the user as indicating that the user has selected that particular option. Where the option in question relates to the simple presence or absence of a function, the control device can simply signal the function and, if the input device is operated during the appropriate following period, the control device takes that function as having been selected. Equally, whereas in the case of, say, water temperature, there may be a number of options, the control device can be arranged to signal each of these options in turn and to take operation of the input device in the period following the signalling to the user of each option as indicating selection of that option.

There are various ways in which the control options may be signalled to the user. One would be by means of a visual display for example of the LED or LCD type. In the embodiment described below with reference to the drawings the signalling to the user of the various options is achieved by use of a voice synthesiser integrated circuit controlled by an associated microprocessor.

Although in the illustrated embodiment the input device is a push button it would of course be possible to provide the control circuitry with a voice recognition circuit and appropriate transducer.

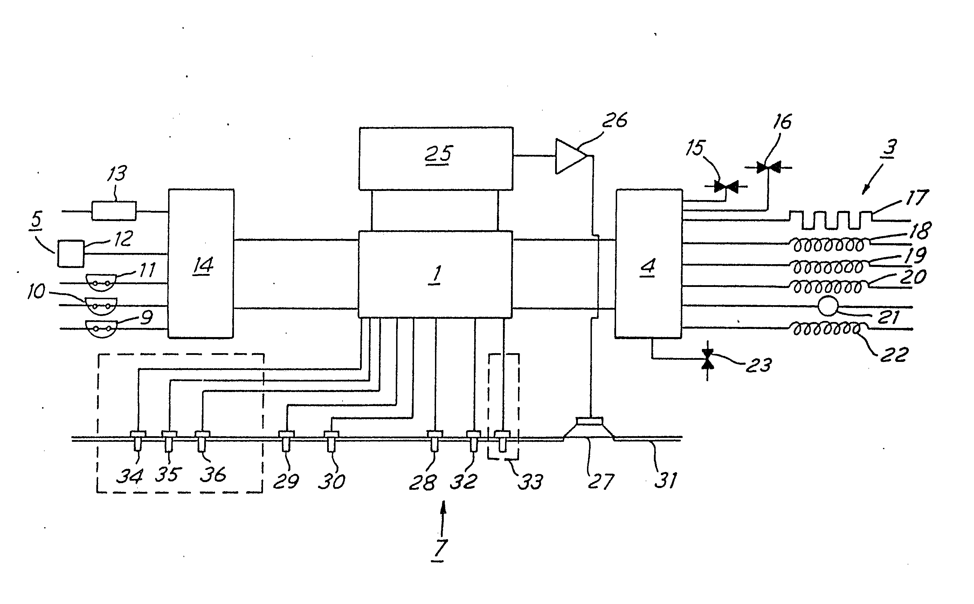

The invention will be further described with reference to the accompanying drawing in which the sole figure is a block circuit·diagram of one embodiment of the present invention as applied to the control of the operation of a washing machine.

The Figure shows the control circuitry of a washing machine embodying the present invention. In the washing machine control circuitry, a microprocessor 1 is provided and suitably programmed to control in the appropriate sequence the operation of the various operating components of the washing machine, generally designated 3, in accordance with a stored set of instructions and signals from a number of input sensors generally designated 5 which sense various parameters relevant to the operation of the machine.  The operating cycle of the machine is performed in accordance with user-selected options for a number of variables such as water temperature, size of load, length of wash, length and speed of spin, etc., these options are selected by the user by means of an arrangement generally designated 7 whose construction and operation will be described in more detail below.

The input sensors 5 include: low, high and overfill pressure-actuated water level sensors 9, 10 and 11, respectively; an out of balance detector 12 which produces an output signal when out of balance rotational forces produced by uneven distribution of articles around the wash drum occurs during the spin phase and produces an unacceptable level of vibration and a water temperature sensor 13 which produces an output signal dependent upon the water temperature.  These signals are received by input interface circuitry 14, converted to digital form where this has not already been done and applied to the microprocessor 1.

The output elements 3 are connected to the microprocessor 1 via interface circuitry 4 and, may include:-

hot and cold water inlet valves 15 and 16 respectively;

an electrically operated water heater 17;

wash, spin and fast spin windings 18, 19 and 20 respectively of the washing machine drive motor;

a drain pump 21, detergent dispenser actuator solenoid 22 and a water outlet valve 23.

Mounted on the front panel 31 of the washing machine are an "on" button 29, "off" button 30, a push button 32 for allowing the user to signal to the microprocessor which one of a number of options he or she has selected and a lamp 28 whose function will be described below.

Also connected to the microprocessor 1 is a voice synthesiser chip 25 (type:- TMS 5100 VS/Processor manufactured by Texas Instruments, for example) whose operation is controlled by the microprocessor 1 and has its output connected via a power amplifier 26 to a loud speaker 27.

In order to start the machine, the user presses the "on" button 29 which causes the microprocessor 1 to undergo an initialisation sequence. Once this initialisation sequence has been completed, the microprocessor 1 drives the voice synthesiser chip 25 so that for a number of wash variables in turn, the machine speaks a number of options for example water temperature, size of load, length of wash, whether or not spin is required, length and speed of spin, whether a pre-wash is required or not and whether or not biological washing powder is to be used. For each variable, where there are more than two options, the microprocessor 1 drives the voice synthesiser chip 25 so that each of the options are spoken in turn and the user selects which of these options he or she requires by pressing the button 32 when the appropriate option is spoken. The microprocessor 1 may also drive a lamp 28 which comes on as each option is spoken and whose "on" period defines the time when operation of the button 32 will signal the microprocessor 1 that that option has been selected. Where the variable or function in question simply requires its selection or otherwise for example the use of biological washing powder and the inclusion of a pre-wash, the microprocessor is programmed so that the pressing of the button 32 during the appropriate period will be taken as indicating that that function is required.

A simplified list of functions and variables could include:-

1. Biological washing powder;
2. Pre-wash;
3. Economy load;
4. No spin;
5. Low speed spin/high speed spin.

0038687

In the case of functions 1 to 4, the microprocessor 1 will be programmed so that the functions are spoken and for a suitable period for each function the bulb 28 is illuminated and to take the pressing of the button 32 during the period of illumination of the lamp 28 to indicate that that function is selected. In the case of 5, the microprocessor 1 will be programmed to flash lamp 28 once as the words "low speed spin" are spoken and once as "high speed spin" is spoken and to take the pushing of the button 32 during the respective periods when the bulb 28 is on as indicating selection of that option. It will be apparent that 4 and 5 could be combined by the microprocessor 1 being programmed to take the button 32 not being pressed in response to either high speed or low speed spin as indicating that no spin is required.

In an alternative arrangement of the instant invention an additional push button 33 (enclosed within the dashed line box in the drawing) is provided, for use in conjunction with button 32, and the microprocessor 1 ensures that the lamp 28 stays in until the operator has either selected an option, by pressing button 32 or rejected it by pressing button 33. Only then will the microprocessor proceed to the next stage in the programme. An arrangement of this kind, which requires a positive response from the operator may be preferred in certain circumstances since the finite delay period provided in the alternative arrangement, described earlier may prove to be too short for an inexperienced operator or too long for an experienced operator.

Once the operating cycle of the machine has been defined in the above way, microprocessor 1 will then operate the washing machine through the operating cycle by generating appropriate signals to drive the output components 3 in response to its internally stored instructions (programmed in the above-described manner) and signals from the input sensors 5.

It will be apparent that in addition to programming the microprocessor 1 so that the various user selectable options are spoken, various warnings and instructions to the user may also be produced. For example, the microprocessor 1 can be programmed so that following its intialisation sequence and such initialisation as may be required of the output components, the words "machine ready to load" are spoken. The microprocessor 1 can be arranged to measure the time that the machine takes to drain, for example by measuring the time between actuation of the drain pump and valves 21 and 23 and the opening of the low pressure water level sensor 9 and to compare this with a prestored value to determine whether or not the water filter is blocked; if it is, this fact can be signalled to the user via the loudspeaker 27. The microprocessor 1 can also be programmed so that in a fault condition such as the machine being overfull of water it signals this fact to the user.

In order to reduce the number of selections which the user has to make, it is possible for the microprocessor 1 to be programmed so that one of the selection functions presents the user with a number of options for the type of articles being washed, with the microprocessor 1 being programmed so that it executes an appropriate washing cycle for the selected type of article.

In addition to the above-described features, the microprocessor 1 could also be programmed to repeat, on reception of a suitable command, previously uttered instructions or information, and an additional push button 34 could be provided for this purpose. This arrangement may be particularly useful on occasions when the operator fails to hear an instruction or is interupted while the operating cycle of the machine is being defined. Similarly, the microprocessor could also be programmed to restart the programming cycle, thereby cancelling all previously received instructions, and a push button 35 could be provided to instruct this response.

It may also be desirable if the system is capable of supplying the operator with useful information relating to each of the operations which he may wish to select. In an alternative embodiment of the invention, therefore, the microprocessor 1 may be programmed to deliver such information, by means of the voice synthesiser, and this mode of operation may be selected, when desired by activating an additional push button 36. Information supplied in this manner relates, for example, to the operating conditions of a selected option, and to the kinds of fabric best suited to those conditions. Push button 33, and push buttons 34, 35 and 36 are enclosed within dashed line boxes to illustrate that one or more thereof may be incorporated into a particular embodiment of the invention.

It will be apparent that although the invention has been described with reference to its application to washing machines, similar principles could also be employed in other domestic appliances, such as in dishwashers and also ovens where the operating time and temperature etc. could be selected in a similar manner to that described above and additionally or instead it will be possible for the microprocessor to be programmed so that it presents the user with options as regards the item to be cooked for example "roast pork/roast beef/etc." and to have stored appropriate cooking times and temperatures for these items.

Because certain wash programmes are used more frequently than others, the microprocessor 1 may be programmed so that in the absence of any user selected options, a standard wash cycle will be performed. Thus the microprocessor 1 may be arranged to signal that unless the user requires any modifications the standard wash cycles will be carried out and then to signal various options for modifying the standard wash programme.

It will be appreciated that the above-described system may be conditioned to utter instructions, information or warnings in languages other than English, especially French, German, Italian and Swedish, and this may be conveniently achieved either by reprogramming or replacing the voice synthesiser chip 25.

What we claim is:-

1.      A device for controlling the operation of an associated apparatus charaterised in that said device comprises,

means (1) for controlling the operating cycle of the apparatus in accordance with a selected one of a number of options,

signalling means (25-27), responsive to the control means, for generating a signal, perceptible by a user, indicative of each of said operations, and input means (7), operable by the user, for conditioning the control means (1) to select said one operation in response to a corresponding signal perceived by the user.

2.      A device according to Claim 1 wherein the signalling means (25-27) generates signals, at preset time intervals, indicative of successive operations and the control means (1) responds to conditioning by the input means (7), to select an operation, only within the preset time interval following generation, by the signalling means, of the signal corresponding to that operation.

3.      A device according to Claim 2 wherein the input means (7) is a switching means (32), and a change in the state of the switching means indicates that a selection has been made.

4.      A device according to Claim 1 wherein the signalling means (25-27) is adapted to generated signals, in sequence, indicative of successive operations and the input means (7) is operable to indicate that an operation has or has not been selected and wherein signals representing the next succeeding operations are generated only when that indication has been given.

5.      A device according to any one of Claims 1 to 4 wherein the control means (1) is arranged to select more than one of said number of operations.

6.      A device according to any one of Claims 1 to 5 wherein said signalling means (25-27) comprises means for generating  an audible signals.

7.      A device according to Claim 6 wherein the signalling means (25-27) comprises voice synthesiser circuit means (25), and means (27) responsive thereto for generating audible signals representative of electrical signals generated by said circuit means.

8.      A device according to any one of Claims 1 to 5 wherein the signalling means comprises means for generating an eye visible display.

9.      A device according to Claim 8 wherein the signalling means is a light emmitting diode or a liquid crystal display.

10.     A device according to any one of Claims 1 to 9 wherein the means (1) for controlling the operating cycle is a microprocessor and the apparatus is a washing machine, or an oven or a dish washer or other domestic appliance.

11.     A device according to any preceding claim wherein the control means is arranged to repeat a signal generated by the signalling means.

12.     A device according to any preceding claim wherein the control means (11) is arranged to supply information when an appropriate triggering signal is applied thereto.